# EUROPEAN PATENT APPLICATION

(11) **EP 1 713 219 A1**
(43) Date of publication of application: **18.10.2006**
(21) Application number: 05290850.6
(22) Date of filing: 15.04.2005
(51) Int. Cl.: H04L 12/58, H04L 29/06

(54) **Communications device and method**

(71) Applicant: FRANCE TELECOM, 75015 Paris (FR)
(72) Inventor: Mansoor, Usama Athar, Beckton. London E6 5NE (GB); Tibbett, Richard, Ealing. London W5 3LA (GB)
(74) Representative: DeVile, Jonathan Mark

(57) **Abstract**

A communications device is arranged to execute a plurality of applications programs which are operable to communicate via a communications network. The communications device includes a message manager operable to control the communication of subscription messages between the applications programs on the communications device and the communications network to subscribe to messaging events. The messaging events provide message information in response to predetermined conditions occurring as determined by entities within the communications network. The message manager comprises a subscription table for storing an association between messaging events and the applications programs, which have subscribed to the messaging events and is operable to receive an instruction from one of the applications programs to subscribe to a messaging event and to determine from the subscription table whether one or more of the other applications programs has currently subscribed to the messaging event. If the subscription table does not include an association between one or more of the other applications programs and the messaging event, the message manager communicates a message in accordance with the subscription instruction to the communications network to subscribe to the messaging event, and stores an association between the messaging event for which the applications program sent the subscription instruction and an identifier of the applications program which sent the subscription instruction. The message manager is operable, upon receipt of an incoming message generated in accordance with the messaging event, to communicate the message information contained in the received incoming message to one or more of the applications programs, which have subscribed to the messaging event. The one or more of the applications programs which have subscribed to the messaging events are determined by the message manager in accordance with the association between the messaging event and one or more of the applications programs identified in the subscription table.

## Description

### Field of the Invention

The present invention relates to communications devices and methods for communicating messages to and from a communications device. The invention also relates to message managers and computer programs for communicating messages.

### Background of the Invention

Communications devices such as mobile communications equipment and portable personal computers are becoming increasingly sophisticated. As such, it is envisaged that communications devices such as smart 'phones, Personal Digital Assistants and notebook personal computers may be required to execute multiple applications programs. These applications programs may sometimes rely on signalling messages, such as Session Initiation Protocol (SIP) messages, from a communications network with which the communications device has registered in order to provide mobile services to the user. The communications network may be a packet mobile radio network operating in accordance with a mobile internet protocol. Generally, different applications expect to receive different signalling messages, although there are instances in which multiple applications may expect the same signalling messages. As will be appreciated, such communications devices have a limited power (both electrical and computational) and communications bandwidth available to them. Accordingly, it is desirable to use the available bandwidth and power as efficiently as possible.

### Summary of the Invention

According to the present invention there is provided a communications device, which is arranged to execute a plurality of applications programs. The applications programs are operable to communicate via a communications network. The communications device includes a message manager operable to control the communication of subscription messages between the applications programs on the communications device and the communications network to subscribe to messaging events. The messaging events provide message information in response to predetermined conditions occurring as determined by entities within the communications network. The message manager comprises a subscription table for storing an association between messaging events and the applications programs, which have subscribed to the messaging events. The message manager is operable to receive an instruction from one of the applications programs to subscribe to a messaging event and to determine from the subscription table whether one or more of the other applications programs has currently subscribed to the messaging event. If the subscription table does not include an association between one or more of the other applications programs and the messaging event, the message manager communicates a message in accordance with the subscription instruction to the communications network to subscribe to the messaging event, and stores an association between the messaging event for which the applications program sent the subscription instruction and an identifier of the applications program which sent the subscription instruction. The message manager is operable, upon receipt of an incoming message generated in accordance with the messaging event, to communicate the message information contained in the received incoming message to one or more of the applications programs, which have subscribed to the messaging event. The one or more of the applications programs which have subscribed to the messaging events are determined by the message manager in accordance with the association between the messaging event and one or more of the applications programs identified in the subscription table.

Accordingly, by managing messaging outside of the applications programs, and subscribing only once, in respect of the communications device as a whole rather than in respect of each applications program, to a messaging event, fewer outgoing messages need be sent, and fewer incoming messages will be received, as no duplicate subscriptions will be present between applications programs. As a result an amount of bandwidth usage of the communications device can be reduced. Furthermore applications programs can dynamically control the messaging events to which they are subscribed, without the communications device necessarily needing to continually send subscribe and unsubscribe messages to the network. The message manager provides the capability to distribute the same message to multiple applications on the same mobile device.

Embodiments of the present invention can be arranged to augment existing technology by providing a mechanism locally at the communications device that can, transparent to network servers and applications, distribute and duplicate the same message to multiple applications. Further, new capabilities may implemented on the communications device to allow for more efficient usage of network resources, in addition to being transparent to both server and client-side applications, enabling a larger range of applications programs to be offered on the same device, rather than these applications programs being provided on physically separate devices.

Preferably, when the message manager receives a request from one of the applications programs to unsubscribe from a messaging event, it removes from the subscription table an association between the messaging event and the applications program from which the request to unsubscribe was received. In particular, the message manager could in this case determine from the subscription table whether applications programs other than the applications program from which the request to unsubscribe was received are associated in the subscription table with the messaging event, and if no other applications programs are associated with the messaging event, communicate a message to a network entity to unsubscribe the communications device from the messaging event.

In one example the messaging event could be a SIP subscribe message and the incoming message could be a SIP NOTIFY message. For example, there may be a number of presence-aware applications such as an address book, an instant messaging client and a push-to-talk client, each of which expect to receive the same presence status notifications (which may be carried in SIP NOTIFY signalling messages) from the network.

The messaging event could be a change in the presence state of an entity in the network. In this case, a change in the presence state of the entity in the network would result in a SIP NOTIFY message being communicated to the communications device, and this message, when received by the message handler would lead to a notification of the change of presence state of the entity being passed to each applications program on the communications device which is subscribed to the messaging event.

Various aspects and features of the present invention are defined in the appended claims, which include a communications system, a communications method, a message processor, a message filter and a message store.

### Brief Description of the Drawings

Example embodiments of the present invention will now be described with reference to the accompanying drawings, where like parts are provided with corresponding reference numerals and in which:
Figure 1 schematically illustrates the routing of incoming SIP messages to multiple application programs;
Figure 2 schematically illustrates a mobile communications device for communicating via a network in accordance with an embodiment of the invention;
Figure 3 is a schematic flow diagram illustrating a subscription procedure for subscribing an applications program of a mobile communications device to a messaging event according to an embodiment of the invention;
Figure 4 is a schematic flow diagram illustrating a notification procedure for notifying an applications program of a mobile communications device of a messaging event according to an embodiment of the invention; and
Figure 5 is a schematic flow diagram illustrating an unsubscribe procedure for unsubscribing an applications program of a mobile communications device from a messaging event according to an embodiment of the invention.

### Description of the Example Embodiments

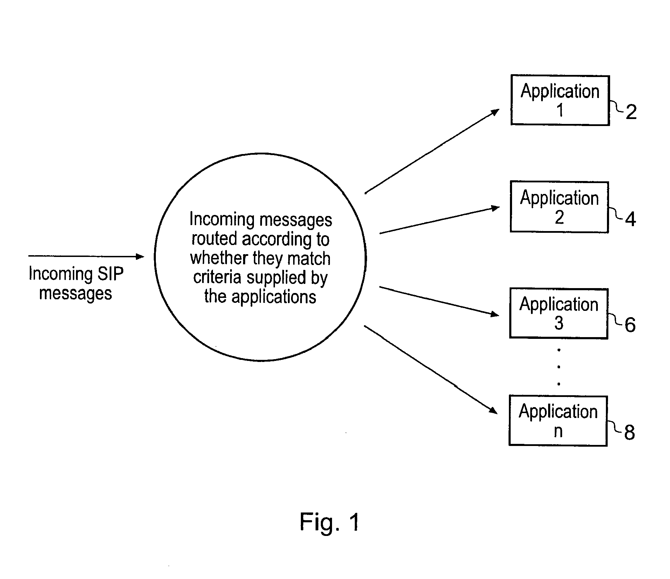

Figure 1 schematically illustrates the routing of incoming Session Initiation Protocol (SIP) messages to multiple application programs, specifically applications 2, 4, 6, 8. When multiple application programs 2, 4, 6, 8 are deployed to a mobile communications device, they may register their interest in receiving specific messages from the network. This interest may be specified by listing the type of message, the variables in that message, and the value of these variables that the applications program is interested in. The mobile communications device can then check all incoming SIP messages against the list of messages which the application programs have registered an interest, and then forward on to the appropriate applications program.

However, several limitations are present within the context of a SIP message. Firstly, two or more application programs cannot register an interest for identical messages. Secondly, only a single instance of a message received at the mobile communications device is forwarded on to a single application. Thirdly, an applications program can only register an interest in a particular message when it is deployed, and not at any other time. In other words, the filter rule for the applications program is static, not dynamic.

For two or more applications to be able to receive copies of the same message, the network servers will have to send multiple copies of the message to the mobile communications device, each message being slightly different to the others, so that they may target the different applications. This leads to a situation that is wasteful of network bandwidth resources, as well as requiring changes to be made to the network servers.

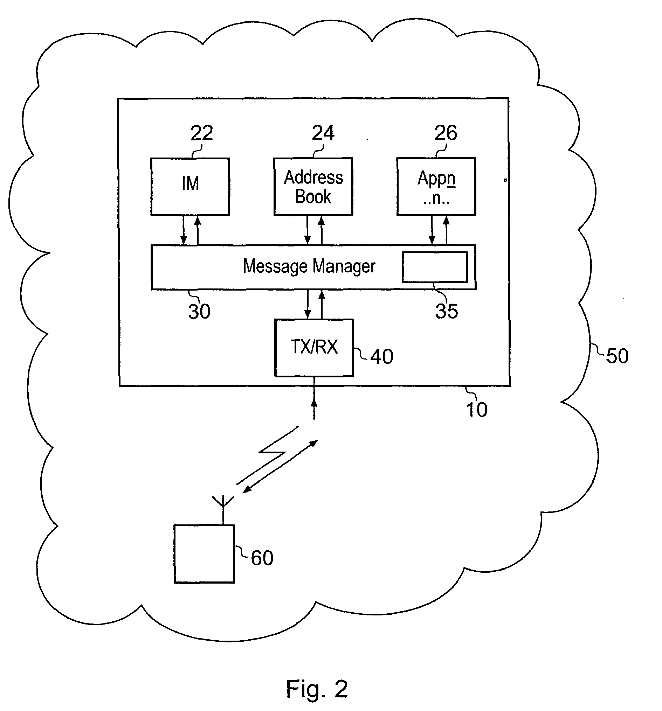

Figure 2 schematically illustrates a mobile communications device 10 for communicating with a network entity 60 via a network 50. The network entity 60 could in one embodiment be an Internet Protocol Multimedia Subsystem (IMS) server in an IMS network, the IMS server being arranged to send and receive Session Initiation Protocol (SIP) messages. The network 50 is in the present example an operators network to which the mobile communications device 10 is registered. The mobile communications device 10 provides a plurality of, in this example three, application programs. The application programs in this example are Instant Messaging (IM) 22, an address book 24 and application n 26. The mobile communications device 10 comprises a transmitter/receiver 40 for providing a communications channel with the network 50.

The application programs 22, 24, 26 do not directly generate and communicate signalling messages to and from the network 50 using the transmitter/receiver 40, but instead communicate messages to and from the network 50 via a message manager 30. Specifically, rather than providing message generation and handling within each applications program, for instance by providing a Session Initiation Protocol (SIP) Real Time Protocol (RTP) layer in the applications program code, these functions are provided by the separate message manager 30 which performs message generation and communication over the network on behalf of all of the application programs. In one example, this functionality could be provided by providing a SIP RTP layer in the message manager 30. By taking out the common message handling functionality from each of the application programs 22, 24, 26, code and processing redundancy in the mobile communications device may be reduced. However, while the message manager is common to each of application programs 22, 24, 26, the application programs themselves need not interact with each other.

The message manager 30 comprises a subscription table 35 which stores correspondence information between subscribed-to message events which result in messages being communicated to the communications device 10 from the network 50, and one or more of the application programs 22, 24, 26 provided on the mobile communications device 10. In the example of SIP, subscriptions within a SIP environment have certain common characteristics such as the user or service subscribed to, the event package to which the subscription belongs, the identity of the provider of the subscription information from the network, and the SIP message body content providing information relating to that subscription. These parameters can be used within the subscription table along with a unique identifier for each application to which an individual subscription belongs.

The message manager can inhibit identical SIP messages from being duplicated to and from the network, saving bandwidth both for the user of the communications device and the network operator.

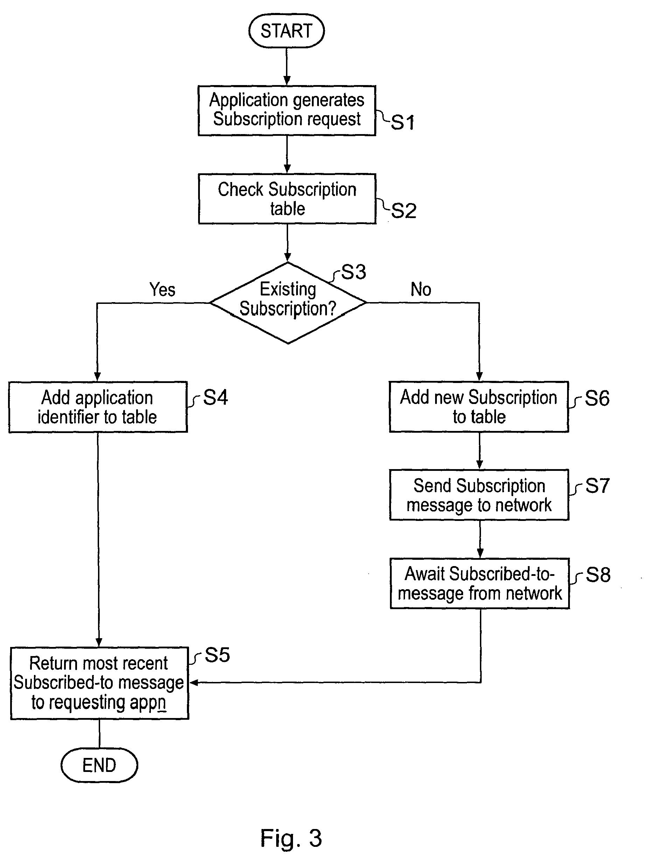

Figure 3 schematically illustrates a subscription procedure for subscribing an applications program of a mobile communications device to a messaging event. At a step S1, an application of the mobile communications device generates a subscription request specifying that the application would like to receive messages in respect of a particular messaging event. The subscription request is passed to the message manager 30, and at a step S2 is compared with the subscription table 35 of the message manager 30 to determine whether an existing subscription exists in respect of the requested subscription. At a step S3, if it is determined that the mobile communications device 10 currently has such a subscription, an applications program identifier is added to the correspondence information in respect of that subscription at a step S4. Then, at a step S5, the most recently received subscribed-to message information in relation to that message event is communicated to the requesting applications program. Alternatively, if at the step S3 it is determined that the mobile communications device 10 does not currently have an active subscription to the requested messaging event, the message manager 30, at a step S6 adds a new subscription to the subscription table 35 in which the requesting applications program is associated with the subscribed to messaging event, and then at a step S7, the message manager 30 generates a subscription message and communicates it to the network 50 to set up a new subscription to that messaging event.

The message manager will then, at a step S8, await a message in respect of the messaging event to be received from the network, and at the step S5 return message information based on the most recently received message to the requesting applications program. Thereafter, messages received in relation to a messaging event will continue to be communicated to the applications stored in association with the messaging event in the subscription table 35.

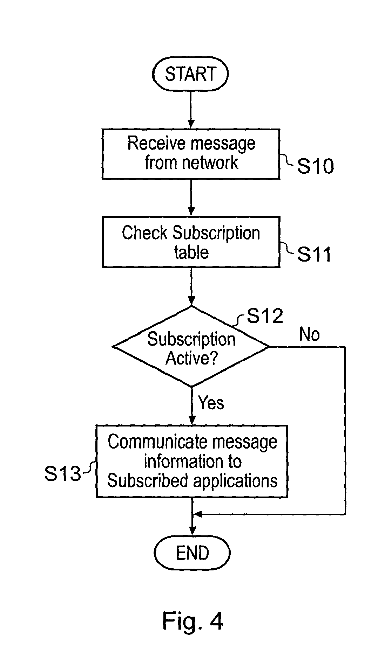

Figure 4 schematically illustrates a notification procedure for notifying one or more of the application programs of a messaging event to which they are subscribed. At a step S10, the message manager 30 receives a message from the network 50 in respect of an event to which the communication device 10 is subscribed. At a step S11, the message handler checks the subscription table to determine whether there is an active subscription to the event to which the received message relates. If it is determined, at a step S12, that no such subscription exists, this is indicative that none of the application programs 22, 24, 26 are interested in the received message, and so no message information in relation to the received message is communicated to any of the application programs. If however, an active subscription to the messaging event is determined as existing, message information relating to the received message is communicated at a step S 13 to each application which is recorded in the subscription table in association with the message event to which the received message relates.

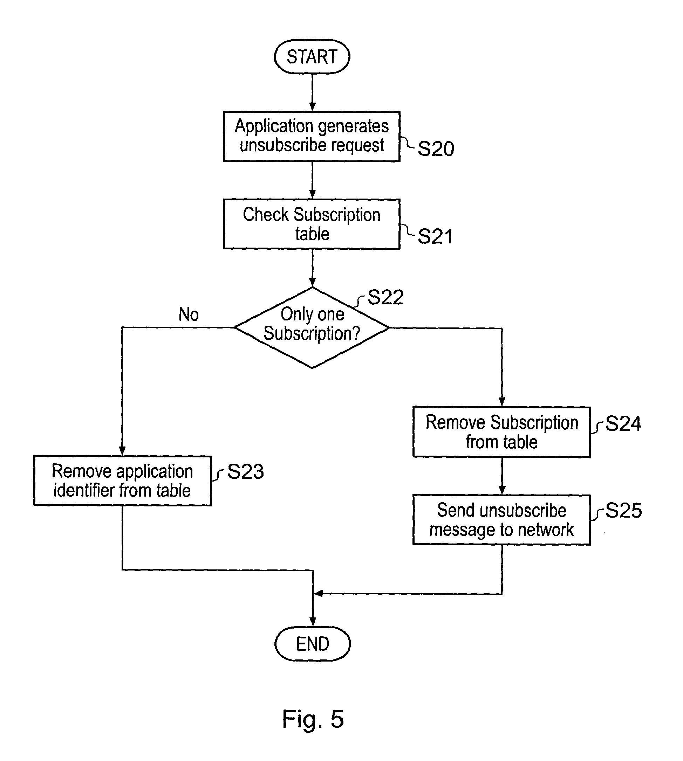

Figure 5 schematically illustrates an unsubscribe procedure for unsubscribing an applications program of a mobile communications device from a messaging event. At a step S20, one of the applications 22, 24, 26 generates a request to unsubscribe from a message event. The unsubscribe request is communicated to the message manager 30, which at a step S21 refers to the subscription table to determine which application programs currently share this subscription. If, at a step S22, it is determined that multiple application programs are currently subscribed to the message event to which the unsubscribe request relates, then at a step S23, an application identifier for the applications program which has sent the unsubscribe request is removed from the subscription table, and no future messages relating to that message event will be communicated to the unsubscribing applications program. No unsubscribe message is sent from the message manager 30 to the network 50 because the subscribed-to messages are still required by other application programs on the mobile communications device. Alternatively, if at the step S22, it is determined that the only applications program subscribed to the message event is the applications program which wishes to unsubscribe from the message event, the subscription is removed from the subscription table 35 at a step S24 and an unsubscribe message is sent to the network 50 at a step S25 to unsubscribe the mobile communications device 10 from the messaging event.

In the context of the Session Initiation Protocol, the messaging event to which the communications device is subscribing may be a registration event occurring when the communications device first logs on to the network. In this case the message sent to a network entity to subscribe the communications device to the event would be a SIP REGISTER message, and an example incoming message generated and communicated to the communications device as a result of the registration event could be a 200 OK message confirming that registration has taken place.

Alternatively, the messaging event to which the communications device is subscribing may be a messaging event which notifies the communication device of a change of status of a network element, such as a change of presence of a user of the network from offline to online or vice versa. In this case, the message sent to the network entity to subscribe the communications device to the event would be a SIP SUBSCRIBE message, and an example incoming message generated and communicated to the communications device as a result of a status change of a network element could be a NOTIFY message providing information about the messaging event.

Various modifications may be made to the embodiments herein before described without departing from the scope of the present invention. For instance, while the above embodiments relate to a mobile communications device, the invention is also applicable to a static communications device which is permanently attached to a network.

## Claims

1. A communications device being arranged to execute a plurality of applications programs, the applications programs being operable to communicate via a communications network, the communications device including:
a message manager operable to control the communication of subscription messages between the applications programs on the communications device and the communications network to subscribe to messaging events, the messaging events providing message information in response to predetermined conditions occurring as determined by entities within the communications network, the message manager comprising
a subscription table for storing an association between messaging events and the applications programs which have subscribed to the messaging events, the message manager being operable
to receive an instruction from one of the applications programs to subscribe to a messaging event;
to determine from the subscription table whether one or more of the other applications programs has currently subscribed to the messaging event; and if the subscription table does not include an association between one or more of the other applications programs and the messaging event, communicating a message in accordance with the subscription instruction to the communications network to subscribe to the messaging event, and storing an association between the messaging event for which the applications program sent the subscription instruction and an identifier of the applications program which sent the subscription instruction; wherein the message manager is operable, upon receipt of an incoming message generated in accordance with the messaging event, to communicate the message information contained in the received incoming message to one or more of the applications programs, which have subscribed to the messaging event in accordance with the association between the messaging event and one or more of the applications programs identified in the subscription table.

2. A communications device according to claim 1, wherein the message manager is operable
to receive an instruction from one of the applications programs to unsubscribe from a messaging event;
responsive to the received unsubscribe instruction, to remove from the subscription table an association between the messaging event and the applications program from which the request to unsubscribe was received.

3. A communications device according to claim 2, wherein the message manager is operable
to determine from the subscription table whether applications programs other than the applications program from which the instruction to unsubscribe was received are associated in the subscription table with the messaging event, and if no other applications programs are associated with the messaging event,
to communicate a message to the communications network to unsubscribe the communications device from the messaging event.

4. A communications device according to any preceding claim, wherein the messages are Session Initiation Protocol (SIP) messages.

5. A communications device according to any preceding Claim, wherein the subscription instructions sent from then applications programs to the message manager are Session Initiation Protocol (SIP) messages.

6. A message manager for communicating messages between a plurality of applications programs and a communications network, the messages representing requests to subscribe to messaging events, the messaging events providing message information in response to predetermined conditions occurring as determined by entities within the communications network, the message manager comprising
a subscription table for storing an association between messaging events and the applications programs which have subscribed to the messaging events, the message manager being operable
to receive an instruction from one of the applications programs to subscribe to a messaging event;
to determine from the subscription table whether one or more of the other applications programs has currently subscribed to the messaging event; and if the subscription table does not include an association between one or more of the other applications programs and the messaging event, communicating a message in accordance with the subscription instruction to the communications network to subscribe to the messaging event, and storing an association between the messaging event for which the applications program sent the subscription instruction and an identifier of the applications program which sent the subscription instruction; wherein the message manager is operable, upon receipt of an incoming message generated in accordance with the messaging event, to communicate the message information contained in the received incoming message to one or more of the applications programs, which have subscribed to the messaging event in accordance with the association between the messaging event and one or more of the applications programs identified in the subscription table.

7. A method of communicating messages between a plurality of applications programs and a communications network, the messages representing requests to subscribe to messaging events, the messaging events providing message information associated with predetermined conditions monitored by entities within the communications network, the method comprising
storing in a subscription table an association between messaging events and the applications programs which have subscribed to the messaging events,
receiving an instruction from one of the applications programs to subscribe to a messaging event;
determining from the subscription table whether one or more of the other applications programs has currently subscribed to the messaging event; and if the subscription table does not include an association between one or more of the other applications programs and the messaging event, communicating a message in accordance with the subscription instruction to the communications network to subscribe to the messaging event, and storing an association between the messaging event for which the applications program sent the subscription instruction and an identifier of the applications program which sent the subscription instruction;
upon receipt of an incoming message generated in accordance with the messaging event, communicating the message information contained in the received incoming message to one or more of the applications programs, which have subscribed to the messaging event in accordance with the association between the messaging event and one or more of the applications programs identified in the subscription table.

8. A computer program providing computer executable instructions, which when loaded on to a data processor causes the data processor to perform the method according to Claim 7.

9. A medium bearing information representing the computer program as claimed in Claim 8.
